# FASCICULE DE BREVET EUROPEEN

(11) **EP 3 831 564 B1**
(45) Date de publication et mention de la délivrance du brevet: **11.01.2023**
(21) Numéro de dépôt: 20306442.3
(22) Date de dépôt: 25.11.2020
(51) Int. Cl.: B27N 3/00, B27N 3/04, C08L 97/02

(54) **PROCÉDÉ DE FABRICATION DE PANNEAUX DE FIBRES LIGNOCELLULOSIQUES**
VERFAHREN ZUR HERSTELLUNG VON PLATTEN AUS LIGNOCELLULOSEFASERN
METHOD FOR MANUFACTURING LIGNOCELLULOSE FIBRE PANELS

(30) Priorité: 02.12.2019 FR 1913609
(43) Date de publication de la demande: 09.06.2021
(73) Titulaire: SAINT-GOBAIN ISOVER, 92400 Courbevoie (FR)
(72) Inventeur: SOISSON, Arnaud, 75012 PARIS (FR)
(74) Mandataire: Saint-Gobain Recherche

(56) Documents cités:
- EP-A1- 0 460 858
- WO-A1-2019/042760
- US-A1- 2003 138 616

## Description

La présente invention concerne un procédé de fabrication de panneaux d'isolation à base de fibres lignocellulosiques liées au moyen d'un liant polyurée/polyuréthanne.

Il est connu d'utiliser pour l'isolation thermique par l'extérieur de toitures et murs de bâtiments des panneaux rigides de fibres de bois ayant des masses volumiques inférieures à environ 250 kg/m³ (Duoprotect de la société Isonat, France). De tels panneaux rigides d'isolation sont décrits par exemple dans WO 2017/129561.

Il est également connu de coller des particules ou fibres de bois (fibres lignocellulosiques) par des liants à base de polyisocyanates. Parmi les polyisocyanates les plus communément utilisés dans l'industrie des panneaux de fibres de bois, on peut citer le poly(méthylène diphényl isocyanate) (pMDI, numéro CAS 9016-87-9) qui est un mélange de qualité technique contenant de 30 à 80 % de MDI (méthylène diphényl isocyanate) et des homologues de poids moléculaire plus élevé de formule

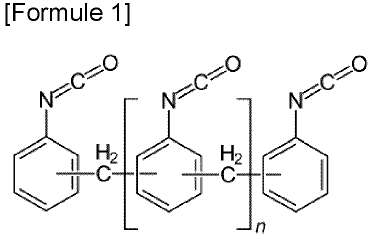

Afin d'assurer un bon mouillage des fibres ou particules lignocellulosiques par le pMDI hydrophobe, il est généralement nécessaire de soumettre les fibres préalablement à un séchage de manière à abaisser leur teneur en eau à une valeur inférieure ou égale à 6 % en poids, notamment comprise entre 2 - 6 % en poids (voir WO 2008/144770).

Plus récemment ont été proposés des pMDI émusifiables (EMDI) qui sont soit des mélanges de pMDI avec des agents tensioactifs non-ioniques exempts d'hydrogènes labiles susceptibles de réagir avec les fonctions isocyanates (voir par exemple EP 0516361), soit des mélanges de pMDI et d'un faible pourcentage de pMDI fonctionnalisé avec des chaînes hydrophiles, par exemple des chaînes polyéthoxylées, permettant de stabiliser l'émulsion.

L'utilisation de pMDI sous forme d'émulsions aqueuses permet une répartition régulière du liant sur les substrats lignocellulosiques sans séchage préalable, ce qui constitue un gain d'énergie significatif.

L'utilisation de liants à base de polyisocyanates, même sous forme d'émulsions aqueuses de pMDI, constitue cependant un problème important de nocivité au lieu de fabrication des panneaux, en raison de la présence des polyisocyanates.

WO2019042760 divulgue un procédé selon le préambule de la revendication 1.

La présente invention vise à réduire la nocivité des panneaux de fibres de bois liées par des liants de type polyuréthanne/polyurée et celle du procédé fabrication de tels panneaux en remplaçant partiellement les polyisocyanates des compositions de liant par d'autres réactifs non-toxiques, de préférence biosourcés, sans pour autant réduire les performances mécaniques des panneaux de fibres obtenus.

Dans le cadre de ses recherches visant à limiter l'utilisation des polyisocyanates, la Demanderesse a testé un grand nombre de matériaux biosourcés et a découvert qu'il était possible de remplacer plus de la moitié du polyisocyanate par des polyols, en particulier par des composés polyhydroxylés d'origine naturelle, renouvelables à court terme, tels que les hydrates de carbone, en particulier les sucres et sucres hydrogénés. Pour cela, les composés polyhydroxylés, ci-après également appelés « polyols », devaient être au moins partiellement hydrosolubles et être dissous dans la phase aqueuse d'une émulsion aqueuse d'un pMDI émulsifiable. Comme il sera montré ci-après dans les exemples de réalisation, le remplacement partiel des polyisocyanates par des polyols hydrosolubles a même dans certains cas permis d'améliorer les propriétés mécaniques des produits finaux.

Tous les polyols testés sont moins chers que les pMDI émulsifiables disponibles sur le marché et leur utilisation en remplacement partiel de ces derniers a par conséquent permis en outre de réduire le coût de fabrication des panneaux d'isolation à base de fibres lignocellulosiques.

Le procédé, objet de la présente invention, présente par conséquent les avantages suivants :
- Utilisation d'une fraction importante de matériaux biosourcés, renouvelables à court terme,
- Réduction de la nocivité des panneaux d'isolation et du procédé de fabrication,
- Conservation, voire amélioration des performances mécaniques des panneaux d'isolation, notamment de leur ridigité, et
- Réduction significative du coût de fabrication des panneaux d'isolation.

La présente invention a par conséquent pour objet un procédé de fabrication de panneaux d'isolation à base de fibres lignocellulosiques, comprenant
(a) La mise à disposition de fibres lignocellulosiques,
(b) L'application sur les fibres lignocellulosiques d'une composition de liant,
(c) La formation d'un matelas de fibres lignocellulosiques par compression des fibres lignocellulosiques imprégnées avec la composition de liant,
(d) Le chauffage du matelas de fibres lignocellulosiques comprimé de manière à obtenir un panneau de fibres lignocellulosiques liées par un liant thermodurci insoluble et infusible,
ledit procédé étant caractérisé par le fait que la composition de liant est une émulsion d'un poly(méthylène diphényl isocyanate) (pMDI) dans une phase aqueuse comprenant de l'eau et un polyol à l'état dissous.

On entend par fibres lignocellulosiques des fibres d'origine végétale à base de matière lignocellulosique, c'est-à-dire comprenant de la cellulose, de l'hémicellulose et de la lignine. Les fibres lignocellulosiques englobent les fibres de bois, et les fibres d'autres plantes par exemple les fibres de chanvre, de lin, de sisal, de coton, de jute, de sisal, de coco, de raphia, fibres d'abaca, ou encore la paille de céréales ou de riz.

Le terme « fibres lignocellulosiques » tel qu'il est utilisé dans la présente demande n'englobe pas les matériaux lignocellulosiques ayant été soumis à des traitements thermomécaniques ou chimique en vue de la fabrication de pâte à papier.

Les fibres lignocellosiques utilisées dans la présente invention ont donc simplement subi un traitement mécanique de comminution destiné à réduire et/ou contrôler la dimension des fibres.

Les fibres lignocellulosiques sont de préférence des fibres de bois de résineux, en particulier de pin, obtenus par défibrage mécanique. Leur diamètre est de quelques centaines de micromètres et elles ont une longueur allant d'envrion 1 à 10 millimètres.

Comme expliqué en introduction, grâce à l'utilisation d'une composition de liant aqueuse sous forme d'émulsion aqueuse, il n'est pas nécessaire de sécher les fibres lignocellulosiques préalablement à l'application de la composition de liant. Les fibres lignocellulosiques utilisées, sans séchage préalable, ont généralement un taux d'humidité compris entre 5 et 15 % en poids, en particulier entre 6 et 10 % en poids, souvent proche de 7 % en poids.

La composition de liant est une émulsion aqueuse d'un pMDI émulsifiable dans une phase aqueuse contenant de l'eau et un composé polyhydroxylé, ou polyol, c'est-à-dire un composé comportant au moins deux fonctions hydroxyle par molécule. Le composé polyhydroxylé est dissous dans la phase aqueuse de l'émulsion.

Cette composition de liant est peu stable d'un point de vue chimique car le pMDI s'hydrolyse en présence d'eau et les fonctions amine formées réagissent avec les fonctions isocyanate pour donner des polyurées.

La composition de liant est donc de préférence préparée immédiatement avant d'être appliquée sur les fibres lignocellulosiques. La préparation de la composition de liant comprend le mélange d'un pMDI émulsifiable (EMDI) avec de l'eau et le composé polyhydroxylé, ces deux derniers composés étant de préférence préalablement mélangés de manière à obtenir la dissolution du polyol. L'homme du métier est en mesure de déterminer les forces de cisaillement nécessaires pour obtenir une émulsion satisfaisante, c'est-à-dire macroscopiquement homogène.

Dans un mode de réalisation préféré, le procédé de la présente demande comprend par conséquent en outre une étape de préparation de la composition de liant par émulsification d'un pMDI émulsifiable dans une phase aqueuse comprenant de l'eau et un polyol à l'état dissous, ladite étape de préparation de la composition de liant étant mise en œuvre de préférence au plus 20 minutes, plus préférentiellement au plus 10 minutes et en particulier au plus 5 minutes avant l'étape (b) d'application de la composition de liant sur les fibres lignocellulosiques.

Les pMDI émulsifiables, également appelés EMDI, sont connus et disponibles sur le marché par exemple sous les dénominations Rubinate 9259, Suprasec 1042, Suprasec 2405, Suprasec 2408, Suprasec 2419 ou I-Bond MDI 4330, I-Bond WFI 4376 par la société Huntsman, ou encore sous la dénomination Voramer MV 4011 de la société Dow.

Les composés polyhydroxylés, ou polyols, sont de préférence des composés d'origine naturelle, c'est-à-dire obtenus à partir de matériaux biologiques renouvelables à court terme, non issus de l'industrie du pétrole. Il s'agit par exemple d'hydrates de carbone choisis parmi les sucres réducteurs et les sucres non-réducteurs. Il peut également s'agir de produits d'hydrogénation de sucres réducteurs ou non réducteurs généralement appelés alditols, alcools de sucres ou sucres hydrogénés.

Les polyols utilisables dans la présente invention peuvent aussi être des alkylèneglycols, tels que l'éthylèneglycol ou le propylèneglycol, ou des polyalkylèneglycols, c'est-à-dire des polymères d'alkylèneglycols, tels que le polyéthylèneglycol et le polypropylèneglycol. Les polyalkylèneglycols ont de préférence une masse moléculaire moyenne en poids inférieure à 500, de préférence inférieure à 200, en particulier inférieure à 100.

Les polyols utilisables dans la présente invention englobent également les polyglycérols de formule HO-(CH₂-CHOH-CH₂-O-)ₙ-H où n est avantageusement compris entre 2 et 30, de préférence entre 3 et 20 et en particulier entre 4 et 15.

Dans un mode de réalisation préféré du procédé de la présente demande le polyol est donc choisi dans le groupe constitué des sucres réducteurs, des sucres non-réducteurs, des sucres hydrogénés, des alkylèneglycols, des poly(alkylèneglycol), des polyglycérols et des mélanges de ceux-ci.

Les sucres réducteurs sont par exemple des monosaccharides tels que le glucose, le galactose, le mannose et le fructose, des disaccharides tels que le lactose, le maltose, l'isomaltose et le cellobiose, ou encore des hydrolysats d'amidon ayant un équivalent dextrose (DE) supérieur à 15, de préférence supérieur à 20, ou des hydrolysats de matières lignocellulosiques.

Les sucres non-réducteurs sont de préférence les diholosides tels que le tréhalose, les isotréhaloses, le saccharose et les isosaccharoses. Le saccharose est particulièrement préféré.

Les sucres hydrogénés sont par exemple choisis parmi l'érythritol, l'arabitol, le xylitol, le sorbitol, le mannitol, l'iditol, le maltitol, l'isomaltitol, le lactitol, le cellobitol, le palatinitol, le maltotritol, le glycérol et les produits d'hydrogénation d'hydrolysats d'amidon ou d'hydrolysats de matières lignocellulosiques, notamment d'hémicellulose, en particulier de xylanes et xyloglucanes.

Dans un mode de réalisation préféré, le polyol est choisi dans le groupe constitué des sucres hydrogénés, de préférence sorbitol, xylitol et glycérol, des alkylèneglycols, de préférence butanediol, des polyglycérols et des mélanges de ceux-ci.

La composition de liant utilisée dans le procédé de la présente invention a de préférence une teneur en eau comprise entre 5 et 60 % en poids, de préférence entre 10 et 50 % en poids et en particulier entre 15 et 40 % en poids. Cette teneur en eau est exprimée par rapport au poids total de la composition. Elle est bien entendu inférieure à la fraction de la phase aqueuse de la composition qui contient également le polyol dissous.

La composition de liant utilisée dans le procédé de la présente invention comprend de 30 à 60 % en poids, de préférence de 35 à 55 % en poids et en particulier de 40 à 50 % en poids de poly(méthylène diphényl isocyanate) émulsifiable, ce pourcentage étant rapporté au poids total de la composition de liant lorsqu'elle est appliquée sur les fibres lignocellulosiques.

Dans la composition de liant, le rapport en poids du polyol au poly(méthylène diisocyanate) émulsifiable est avantageusement compris entre 10/90 et 70/30, de préférence entre 15/85 et 65/35, en particulier entre 20/80 et 60/40. Lorsque ce rapport est inférieur à 10/90, la réduction du coût et de la nocivité de la composition de liant et des produits obtenus est insuffisante. Pour des raisons faciles à comprendre, on visera généralement à ce que le rapport pondéral polyol/pMDI soit le plus élevé possible. Au-delà d'une certaine limite, qui dépend entre autres de la quantité d'eau et de la masse moléculaire des réactifs, le liant durci sera toutefois insuffisamment réticulé car le nombre de fonctions isocyanate, réactives vis-à-vis des groupes hydroxyle du polyol et de l'eau, sera insuffisant pour former un réseau tridimensionnel suffisamment dense pour conférer aux panneaux d'isolation de fibres lignocellulosiques des propriétés mécaniques satisfaisantes.

La composition de liant peut contenir, en plus des trois ingrédients principaux décrits ci-dessus (pMDI, polyol, eau), une faible fraction d'un ou plusieurs additifs fonctionnels. Ces additifs sont choisis par exemple parmi la paraffine (sous forme émulsionnée), des agents biocides, des agents ignifugeants, les colorants, les charges minérales, et les agents mouillants. La fraction totale des différents additifs ne dépasse généralement pas 10 % en poids, en particulier 5 % en poids, du poids total de la composition de liant au moment où celle-ci est appliquée sur les fibres.

L'application de la composition de liant émulsionnée sur les fibres lignocellulosiques peut se faire par exemple par injection continue de la composition de liant dans la ligne de transport pneumatique (*blow line*) des fibres sortant du défibreur.

La composition de liant est de préférence appliquée en une quantité telle qu'après l'étape de durcissement thermique (d) le panneau d'isolation présente une teneur en liant thermodurci comprise entre 4 et 20 % en poids, de préférence entre 5 et 10 %, rapporté au poids sec total du panneau.

Le procédé de fabrication de panneau d'isolation à base de fibres lignocellulosiques de la présente invention comprend une étape de compression des fibres imprégnées de la composition de liant et une étape de chauffage des fibres comprimées. Bien que ces deux étapes puissent en principe être mises en œuvre l'une après l'autre, il est préférable qu'elles soient mises en œuvre de manière concomitante, c'est-à-dire simultanément. Le durcissement thermique du liant mis en œuvre sur le panneau maintenu sous pression permet une excellente maîtrise de la masse volumique et des dimensions du produit final.

La température de chauffage du matelas de fibres lignocellulosiques comprimé est généralement comprise entre 130 et 165 °C, de préférence entre 140 °C et 155 °C. Cette gamme de température correspond à la température de consigne de la presse chauffante. Les températures mesurées au cœur du matériau pendant l'étape de durcissement thermique sont alors comprise entre environ 90 et 120 °C.

La réaction des groupes isocyanates avec les groupes hydroxyle du polyol et du matériau lignocellulosique est très rapide et il suffit généralement de maintenir les températures de chauffage ci-dessus pendant quelques dizaines de secondes seulement. La durée de chauffage est de préférence comprise entre 10 secondes et 10 minutes, plus préférentiellement entre 20 et 5 minutes et en particulier entre 30 secondes et 3 minutes.

Après compression et chauffage, ou chauffage sous pression des fibres lignocellulosiques, les panneaux de fibres obtenus à l'issue de l'étape (d) présentent avantageusement une masse volumique comprise entre 30 et 250 kg/m³, de préférence entre 50 et 230 kg/m³, en particulier entre 100 et 200 kg/m³.

### Exemples

Tous les échantillons sont réalisés avec des fibres lignocellulosiques de bois de résineux (pin de Douglas), mises à disposition par la société Isonat. La teneur en humidité des fibres est déterminée par thermogravimétrie et est ajustée par ajout d'eau jusqu'à une teneur en humidité de 7 %. Les fibres de tous les échantillons ont donc la même teneur en eau de 7 % en poids.

On prépare des compositions de liant en émulsionnant du pMDI émulsifiable (I-Bond WFI 4376 commercialisé par Huntsman) avec de l'eau (exemple comparatif) ou avec une phase aqueuse contenant de l'eau et du polyol (exemples selon l'invention). On vérifie que le pMDI est suffisamment réactif en déterminant au préalable le taux de fonctions isocyanate conformément à la norme NF EN ISO 1496. Il est en l'occurrence compris entre 6,9 - 7,1 équivalents/kg de pMDI.

Toutes les compositions de liant contiennent 40 % en poids d'eau et 60 % en poids de matières sèches (pMDI pour l'exemple comparatif ou pMDI + polyol pour les exemples selon l'invention). Elles sont préparées moins de 5 minutes avant la mise en contact avec les fibres lignocellulosiques.

Pour les exemples selon l'invention, une partie du pMDI est remplacée par une quantité pondérale équivalente de polyol dissous préalablement dans la phase aqueuse.

Pour chaque essai, on imprègne 600 mg de fibres lignocellulosiques (teneur en humidité 7 %) avec 70 mg de composition de liant en créant dans un flacon de 120 ml un vortex au moyen d'un agitateur magnétique (environ 1300 tpm, 3 minutes).

217 mg de fibres imprégnées sont ensuite introduites, moins de 30 minutes après l'imprégnation, dans des moules en acier comportant des cavités ouvertes de 60 mm x 10 mm x 12 mm et répartis uniformément dans chaque cavité de moule. Des barres en acier de 60 mm x 10 mm x 10 mm sont posées sur les fibres de bois et l'ensemble est chauffé pendant 240 secondes dans une presse thermostatée à 150 °C et sous une pression de 10 bars. On laisse ensuite refroidir les moules jusqu'à température ambiante avant de retirer les plaquettes lignocellulosiques formées (10 x 60 x 2 mm).

On détermine pour chaque plaquette le module de conservation en flexion (flexion en trois points) par analyse mécanique dynamique au moyen d'un appareil « TA Instruments RSA-G2 Analyzer ». Les échantillons sont préalablement séchés plusieurs heures dans un dessiccateur sous vide dynamique (20 mbar).

Les paramètres de fonctionnement de l'appareil de mesure sont les suivants :
Température : 25 °C
Rapport de Poisson : 0,45
Durée de la sollicitation mécanique oscillatoire : 120 secondes
Fréquence d'oscillation : 1,0 Hz,
Précontrainte : 0,15 N
Vitesse d'échantillonnage : 10 points/seconde

Le tableau 1 ci-dessous montre le module de conservation des plaquettes préparées avec des compositions de liant contenant uniquement du pMDI (60 %) et de l'eau (40 %) (exemple comparatif) ou bien avec des émulsions contenant de l'eau (40 %), du pMDI et différents polyols (exemples selon l'invention) utilisés en remplacement partiel du pMDI. Pour tous les exemples selon l'invention, le poids total de pMDI et de polyol représente 60 % de la composition de liant.

Le taux de remplacement du pMDI est défini comme le poids de polyol rapporté au poids total de pMDI + polyol.

Chaque valeur de module de conservation est la moyenne calculée sur deux à quatre valeurs de mesure individuelles.

**[Table 1]**

| Exemple | Polyol | Taux de remplacement du pMDI par le polyol | Module de conservation |
|---|---|---|---|
| Exemple comparatif | - | 0 | 100 MPa |
| Ex 1 selon l'invention | butanediol | 26 % | 158 MPa |
| Ex 2 selon l'invention | butanediol | 30 % | 117 MPa |
| Ex 3 selon l'invention | butanediol | 40 % | 124 MPa |
| Ex 4 selon l'invention | glycérol | 20 % | 229 MPa |
| Ex 5 selon l'invention | glycérol | 26 % | 164 MPa |
| Ex 6 selon l'invention | glycérol | 32 % | 204 MPa |
| Ex 7 selon l'invention | sorbitol | 20 % | 116 MPa |
| Ex 8 selon l'invention | sorbitol | 30 % | 129 MPa |
| Ex 9 selon l'invention | sorbitol | 40 % | 168 MPa |
| Ex 10 selon l'invention | sorbitol | 50 % | 126 MPa |

On constate que toutes les plaquettes obtenues avec un mélange de pMDI et de polyol ont un module de conservation plus élevé que celle de l'exemple comparatif. Les trois polyols utilisés sont moins chers que le pMDI et le remplacement de ce dernier permet ainsi de réduire le coût de fabrication des produits. Enfin, les trois polyols utilisés étant parfaitement inoffensifs d'un point de vue toxicologique, le remplacement du pMDI permet de réduire considérablement la nocivité des produits et du procédé de fabrication.

## Revendications

1. Procédé de fabrication de panneaux d'isolation à base de fibres lignocellulosiques, comprenant
(a) La mise à disposition de fibres lignocellulosiques,
(b) L'application sur les fibres lignocellulosiques d'une composition de liant,
(c) La formation d'un matelas de fibres lignocellulosiques par compression des fibres lignocellulosiques imprégnées avec la composition de liant,
(d) Le chauffage du matelas de fibres lignocellulosiques comprimé de manière à obtenir un panneau de fibres lignocellulosiques liées par un liant thermodurci insoluble et infusible,
ledit procédé étant **caractérisé par le fait que** la composition de liant est une émulsion d'un poly(méthylène diphényl isocyanate) (pMDI) dans une phase aqueuse comprenant de l'eau et un polyol à l'état dissous.

2. Procédé selon la revendication 1, **caractérisé par le fait que** le polyol est choisi dans le groupe constitué des sucres réducteurs, sucres non-réducteurs, sucres hydrogénés, alkylèneglycols, poly(alkylèneglycol), polyglycérols et des mélanges de ceux-ci.

3. Procédé selon la revendication 1 ou 2, **caractérisé par le fait que** le polyol est choisi dans le groupe constitué des sucres hydrogénés, de préférence sorbitol, xylitol et glycérol, des alkylèneglycols, de préférence 1,4-butanediol, des polyglycérols et des mélanges de ceux-ci.

4. Procédé selon la revendication 1, **caractérisé par le fait que** la composition de liant comprend de 30 à 60 % en poids de poly(méthylène diphényl isocyanate) émulsifiable.

5. Procédé selon l'une quelconque des revendications précédentes, **caractérisé par le fait que** le rapport en poids du polyol au poly(méthylène diphényl isocyanate) émulsifiable est compris entre 10/90 et 70/30, de préférence entre 15/85 et 65/35 et en particulier entre 20/80 et 60/40.

6. Procédé selon l'une quelconque des revendications précédentes, **caractérisé par le fait que** la teneur en eau de la composition de liant est comprise entre 5 et 60 % en poids, de préférence entre 10 et 50 % en poids, en particulier entre 15 et 40 % en poids.

7. Procédé selon l'une quelconque des revendications précédentes, **caractérisé par le fait que** les étapes (c) et (d) sont concomitantes.

8. Procédé selon l'une quelconque des revendications précédentes, **caractérisé par le fait que** la composition de liant contient en outre un ou plusieurs additifs choisis parmi la paraffine, des agents biocides, des agents ignifugeants, les colorants, les charges minérales, les agents mouillants.

9. Procédé selon l'une quelconque des revendications précédentes, **caractérisé par le fait que** le panneau de fibres lignocellulosiques obtenu à l'issue de l'étape (d) présente une teneur en liant thermodurci comprise entre 4 et 20 % en poids, de préférence entre 5 et 10 %, rapporté au poids sec total du panneau.

10. Procédé selon l'une quelconque des revendications précédentes, **caractérisé par le fait que** le panneau de fibres obtenu à l'issue de l'étape (d) présente une masse volumique comprise entre 30 et 250 kg/m³, de préférence entre 50 et 230 kg/m³, en particulier entre 100 et 200 kg/m³.

11. Procédé selon l'une quelconque des revendications précédentes, **caractérisé par le fait que** la température de chauffage du matelas de fibres lignocellulosiques comprimé est comprise entre 130 °C et 165 °C, de préférence entre 140 °C et 155 °C.

12. Procédé selon la revendication précédente, **caractérisé par le fait que** la durée de chauffage est comprise entre 10 secondes et 10 minutes, de préférence entre 20 secondes et 5 minutes et en particulier entre 30 secondes et 3 minutes

13. Procédé selon l'une quelconque des revendications précédentes, **caractérisé par le fait qu'**il comprend en outre une étape de préparation de la composition de liant comprenant l'émulsification d'un pMDI émulsifiable dans une phase aqueuse comprenant de l'eau et un polyol à l'état dissous.

14. Procédé selon la revendication 13, dans laquelle l'étape de préparation de la composition de liant est mise en œuvre au plus 20 minutes, de préférence au plus 10 minutes et en particulier au plus 5 minutes avant l'étape (b) d'application de la composition de liant sur les fibres lignocellulosiques.

15. Procédé selon l'une quelconque des revendications précédentes, **caractérisé par le fait que** les fibres lignocellulosiques ont un taux d'humidité compris entre 5 et 15 % en poids, de préférence entre 6 et 10 % en poids.

## Patentansprüche

1. Verfahren zur Herstellung von Dämmplatten auf Basis von Lignocellulosefasern, umfassend
(a) das Bereitstellen von Lignocellulosefasern,
(b) das Aufbringen einer Bindemittelzusammensetzung auf die Lignocellulosefasern,
(c) die Bildung einer Matte aus Lignocellulosefasern durch Komprimieren der mit der Bindemittelzusammensetzung imprägnierten Lignocellulosefasern,
(d) das Erwärmen der komprimierten Matte aus Lignocellulosefasern sodass eine Platte aus Lignocellulosefasern erhalten wird, die durch ein unlösliches und unschmelzbares wärmegehärtetes Bindemittel gebunden sind,
wobei das Verfahren **dadurch gekennzeichnet ist, dass** die Bindemittelzusammensetzung eine Emulsion eines Poly(methylendiphenylisocyanats) (pMDI) in einer wässrigen Phase ist, die Wasser und ein Polyol in gelöstem Zustand umfasst.

2. Verfahren nach Anspruch 1, **dadurch gekennzeichnet, dass** das Polyol ausgewählt ist aus der Gruppe bestehend aus reduzierenden Zuckern, nichtreduzierenden Zuckern, hydrierten Zuckern, Alkylenglykolen, Poly(alkylenglykol), Polyglycerinen und Mischungen davon.

3. Verfahren nach Anspruch 1 oder 2, **dadurch gekennzeichnet, dass** das Polyol ausgewählt ist aus der Gruppe bestehend aus hydrierten Zuckern, vorzugsweise Sorbit, Xylit und Glycerin, Alkylenglykolen, vorzugsweise 1,4-Butandiol, Polyglycerinen und Mischungen davon.

4. Verfahren nach Anspruch 1, **dadurch gekennzeichnet, dass** die Bindemittelzusammensetzung zu 30 bis 60 Gewichts-% emulgierbares Poly(methylendiphenylisocyanat) umfasst.

5. Verfahren nach einem der vorstehenden Ansprüche, **dadurch gekennzeichnet, dass** das Gewichtsverhältnis von Polyol zu emulgierbarem Poly(methylendiphénylisocyanat) zwischen 10/90 und 70/30, vorzugsweise zwischen 15/85 und 65/35 und insbesondere zwischen 20/80 und 60/40 liegt.

6. Verfahren nach einem der vorstehenden Ansprüche, **dadurch gekennzeichnet, dass** der Wassergehalt der Bindemittelzusammensetzung zwischen 5 und 60 Gewichts-%, vorzugsweise zwischen 10 und 50 Gewichts-%, insbesondere zwischen 15 und 40 Gewichts-% liegt.

7. Verfahren nach einem der vorstehenden Ansprüche, **dadurch gekennzeichnet, dass** die Schritte (c) und (d) gleichzeitig erfolgen.

8. Verfahren nach einem der vorstehenden Ansprüche, **dadurch gekennzeichnet, dass** die Bindemittelzusammensetzung ferner einen oder mehrere Zusatzstoffe enthält, ausgewählt aus Paraffin, Biozidmitteln, Flammschutzmitteln, Farbstoffen, mineralischen Füllstoffen und Netzmitteln.

9. Verfahren nach einem der vorstehenden Ansprüche, **dadurch gekennzeichnet, dass** die am Ende von Schritt (d) erhaltene Platte aus Lignocellulosefasern bezogen auf das Gesamttrockengewicht der Platte einen Gehalt an wärmegehärtetem Bindemittel zwischen 4 und 20 Gewichts-%, vorzugsweise zwischen 5 und 10 % aufweist.

10. Verfahren nach einem der vorstehenden Ansprüche, **dadurch gekennzeichnet, dass** die am Ende von Schritt (d) erhaltene Faserplatte eine Dichte zwischen 30 und 250 kg/m³, vorzugsweise zwischen 50 und 230 kg/m³, insbesondere zwischen 100 und 200 kg/m³ aufweist.

11. Verfahren nach einem der vorstehenden Ansprüche, **dadurch gekennzeichnet, dass** die Erwärmungstemperatur der komprimierten Lignocellulosefasermatte zwischen 130 °C und 165 °C, vorzugsweise zwischen 140 °C und 155 °C liegt.

12. Verfahren nach dem vorstehenden Anspruch, **dadurch gekennzeichnet, dass** die Dauer der Erwärmung zwischen 10 Sekunden und 10 Minuten, vorzugsweise zwischen 20 Sekunden und 5 Minuten und insbesondere zwischen 30 Sekunden und 3 Minuten liegt

13. Verfahren nach einem der vorstehenden Ansprüche, **dadurch gekennzeichnet, dass** es ferner einen Schritt des Zubereitens der Bindemittelzusammensetzung umfasst, der die Emulgierung eines emulgierbaren pMDI in einer wässrigen Phase umfasst, die Wasser und ein Polyol in gelöstem Zustand umfasst.

14. Verfahren nach Anspruch 13, wobei der Schritt des Zubereitens der Bindemittelzusammensetzung höchstens 20 Minuten, vorzugsweise höchstens 10 Minuten und insbesondere höchstens 5 Minuten vor dem Schritt (b) des Auftragens der Bindemittelzusammensetzung auf die Lignocellulosefasern durchgeführt wird.

15. Verfahren nach einem der vorstehenden Ansprüche, **dadurch gekennzeichnet, dass** die Lignocellulosefasern einen Feuchtigkeitsgehalt zwischen 5 und 15 Gewichts-%, vorzugsweise zwischen 6 und 10 Gewichts-% aufweisen.

## Claims

1. Process for the manufacture of lignocellulosic fibre-based insulation boards, comprising
(a) Providing lignocellulosic fibres,
(b) Applying a binder composition to the lignocellulosic fibres,
(c) Forming a lignocellulosic fibre mat by compressing the lignocellulosic fibres impregnated with the binder composition,
(d) Heating the compressed lignocellulosic fibre mat so as to obtain a lignocellulosic fibreboard bound by an insoluble and infusible thermoset binder,
said process being **characterized by** the fact that the binder composition is an emulsion of a poly(methylene diphenyl isocyanate) (pMDI) in an aqueous phase comprising water and a polyol dissolved therein.

2. Process according to Claim 1, **characterized by** the fact that the polyol is selected from the group consisting of reducing sugars, non-reducing sugars, hydrogenated sugars, alkylene glycols, poly(alkylene glycol), polyglycerols and mixtures thereof.

3. Process according to Claim 1 or 2, **characterized by** the fact that the polyol is selected from the group consisting of hydrogenated sugars, preferably sorbitol, xylitol and glycerol, alkylene glycols, preferably 1,4-butanediol, polyglycerols and mixtures thereof.

4. Process according to Claim 1, **characterized by** the fact that the binder composition comprises from 30 to 60% by weight emulsifiable poly(methylene diphenyl isocyanate).

5. Process according to any one of the preceding claims, **characterized by** the fact that the weight ratio of polyol to emulsifiable poly(methylene diphenyl isocyanate) is comprised between 10/90 and 70/30, preferably between 15/85 and 65/35 and in particular between 20/80 and 60/40.

6. Process according to any one of the preceding claims, **characterized by** the fact that the water content of the binder composition is comprised between 5 and 60% by weight, preferably between 10 and 50% by weight, in particular between 15 and 40% by weight.

7. Process according to any one of the preceding claims, **characterized by** the fact that steps (c) and (d) are concomitant.

8. Process according to any one of the preceding claims, **characterized by** the fact that the binder composition further contains one or more additives selected from paraffin wax, biocidal agents, flame retardants, dyes, mineral fillers, wetting agents.

9. Process according to any one of the preceding claims, **characterized by** the fact that the lignocellulosic fibreboard obtained at the end of step (d) has a thermoset binder content comprised between 4 and 20% by weight, preferably between 5 and 10%, relative to the total dry weight of the board.

10. Process according to any one of the preceding claims, **characterized by** the fact that the fibreboard obtained at the end of step (d) has a density comprised between 30 and 250 kg/m³, preferably between 50 and 230 kg/m³, in particular between 100 and 200 kg/m³.

11. Process according to any one of the preceding claims, **characterized by** the fact that the heating temperature of the compressed mat of lignocellulosic fibres is comprised between 130 °C and 165 °C, preferably between 140 °C and 155 °C.

12. Process according to the preceding claim, **characterized by** the fact that the heating time is comprised between 10 seconds and 10 minutes, preferably between 20 seconds and 5 minutes and in particular between 30 seconds and 3 minutes.

13. Process according to any one of the preceding claims, **characterized by** the fact that it further comprises a step of preparing the binder composition comprising the emulsification of an emulsifiable pMDI in an aqueous phase comprising water and a polyol in dissolved form.

14. Process according to Claim 13, wherein the step of preparing the binder composition is carried out at most 20 minutes, preferably at most 10 minutes and in particular at most 5 minutes before the step (b) of applying the binder composition to the lignocellulosic fibres.

15. Process according to any one of the preceding claims, **characterized by** the fact that the lignocellulosic fibres have a moisture content comprised between 5 and 15% by weight, preferably between 6 and 10% by weight.
